# EUROPÄISCHE PATENTANMELDUNG

(11) **EP 4 574 864 A1**
(43) Veröffentlichungstag der Anmeldung: **25.06.2025**
(21) Anmeldenummer: 23217968.9
(22) Anmeldetag: 19.12.2023
(51) Int. Cl.: C08G 18/02, C08G 18/09, C08G 18/22, C08G 18/24, C08G 18/28, C08G 18/36, C08G 18/38, C08G 18/40, C08G 18/48, C08G 18/54, C08G 18/65, C08G 18/66, C08G 18/72, C08G 18/78, C08G 18/79, C08G 18/80, C09D 175/02, C09D 175/04, C08G 18/62

(54) **POLYISOCYANATGEMISCH**

(71) Anmelder: Covestro Deutschland AG, 51373 Leverkusen (DE)
(72) Erfinder: LAAS, Hans-Josef, 51519 Odenthal (DE); MUNDSTOCK, Holger, 42929 Wermelskirchen (DE)
(74) Vertreter: Levpat

(57) **Zusammenfassung**

Die Erfindung betrifft ein Polyisocyanatgemisch, ein Verfahren zu dessen Herstellung sowie deren Verwendung als Ausgangskomponente zur Herstellung von Polyurethankunststoffen. Weiterhin betrifft die Erfindung Beschichtungsmittel enthaltend das Polyisocyanatgemisch sowie die mit diesen Beschichtungsmitteln beschichteten Substrate.

## Beschreibung

Die Erfindung betrifft ein Polyisocyanatgemisch, ein Verfahren zu dessen Herstellung, sowie die Verwendung des Polyisocyanatgemisches. Weitere Gegenstände der Erfindung sind eine, das Polyisocyanatgemisch enthaltende Zusammensetzung, ein Verfahren zur Herstellung einer Beschichtung auf einem Substrat sowie das beschichtete Substrat.

Zweikomponenten-Polyurethanlacke (2K-PUR) haben aufgrund ihrer hervorragenden technologischen Eigenschaften für eine Vielzahl unterschiedlicher Anwendungsgebiete Bedeutung erlangt. Als Vernetzerkomponenten für lichtbeständige, nicht vergilbende 2K-PUR-Lacke und -Beschichtungen dienen in der Regel Polyisocyanate auf Basis linearaliphatischer bzw. cycloaliphatischer Diisocyanate.

2K-PUR-Lacke, die mit aliphatischen Polyisocyanaten, insbesondere Derivaten des Hexamethylendiisocyanats (HDI), gegebenenfalls in Kombination mit Polyisocyanaten auf Basis des cycloaliphatischen Isophorondiisocyanats (IPDI) vernetzt werden, liefern Beschichtungen hoher mechanischer und chemischer Beständigkeit und sehr guter Optik.

Trotz des bereits erreichten hohen Qualitätsniveaus der 2K-PUR-Lacke besteht im Markt ein beständiges Interesse an Beschichtungssystemen mit immer weiter verbesserten Eigenschaften, insbesondere einer verbesserter Kratzbeständigkeit.

Der Trend zu nachhaltigeren Produkten führte in den letzten Jahren auch im Bereich der Polyurethane zu einer steigenden Nachfrage nach biobasierten Rohstoffen. Dies war Anlass zur Entwicklung von Polyisocyanatvernetzern auf Basis des aus Biomasse zugänglichen 1,5-Diisocyanatopentan (im Folgenden auch Pentamethylendiisocyanat oder PDI genannt) (siehe z. B. EP-A 3 271 432 und WO 2016/169810). Unter Verwendung von biobasierten PDI-Polyisocyanaten hergestellte PUR-Lacke und -Klebstoffe zeigen ein ähnliches Eigenschaftsniveau wie solche, die mit vergleichbaren HDI-Polyisocyanaten auf petrochemischer Basis vernetzt wurden, und sind diesen in einigen Anwendungsbereichen sogar überlegen.

Ein gravierender Nachteil von PDI-Polyisocyanaten ist allerdings die Tatsache, dass sie im Vergleich zu entsprechenden HDI-Derivaten bei vergleichbarer Oligomerenverteilung höhere Viskositäten aufweisen (M. Widemann et al., ACS Sustainable Chem. Eng. 2018, 6, 9753-9759; DOI: http://dx.doi.org/10.1021/acssuschemeng.8b00758) und zu ihrer Verarbeitung in der Regel größere Mengen organischer Lösemittel benötigt werden. Gerade aber in nachhaltigen Lack- und Klebstoffsystemen ist ein möglichst geringer Anteil an flüchtigen organischen Bestandteilen gewünscht.

Insbesondere für Anwendungen, wie z. B. die Autoreparaturlackierung, bestand daher ein Bedarf an nachhaltigen Polyisocyanatgemischen, die ausreichend niedrige Viskositäten aufweisen, um sie in lösemittelarmer oder -freier Form verarbeiten zu können.

Die Aufgabe der vorliegenden Erfindung bestand somit darin, nachhaltige Polyisocyanatgemische bereitzustellen, die ausreichend niedrige Viskositäten aufweisen, um sie in lösemittelarmer oder -freier Form verarbeiten zu können, und zu Beschichtungen mit einer verbesserten Kratzfestigkeit führen.

Diesem Bedarf Rechnung tragend ist ein Gegenstand der vorliegenden Erfindung ein Polyisocyanatgemisch, enthaltend mindestens ein Polyisocyanat M) der allgemeinen Formel (I) 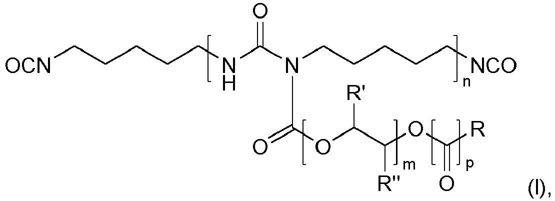 in welcher
- R: für einen linearen oder verzweigten, gesättigten oder ungesättigten aliphatischen und/oder gesättigten oder ungesättigten cycloaliphatischen Rest mit (6 bis 22) - p Kohlenstoffatomen, der jeweils gegebenenfalls substituiert sein kann, steht,
- R' und R": unabhängig voneinander für Wasserstoff oder einen aliphatischen Rest mit 1 bis 10 Kohlenstoffatomen stehen, wobei mindestens einer der Reste R` und R" für Wasserstoff steht,
- n: für eine ganze Zahl von 1 bis 12,
- m: für eine ganze Zahl von 1 bis 10 und
- p: für 0 oder 1 steht

und mindestens ein von Polyisocyanat M) verschiedenes Polyisocyanat N) mit Uretdion-, Isocyanurat-, Iminooxadiazindion-, Urethan-, Allophanat-, Biuret- und/oder Oxadiazintrionstruktur, die aliphatisch, cycloaliphatisch, araliphatisch und/oder aromatisch gebundene Isocyanatgruppen tragen,
wobei die Polyisocyanate M) und N) in einem Gewichtsverhältnis zueinander von 50 : 50 bis 20 : 80 vorliegen.

Gegenstand der Erfindung ist auch ein Verfahren zur Herstellung der erfindungsgemäßen Polyisocyanatgemische, dadurch gekennzeichnet, dass mindestens ein Polyisocyanat M) der allgemeinen Formel (I) 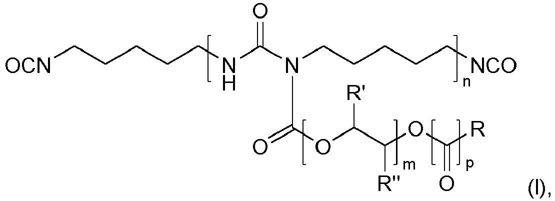 in welcher
R für einen linearen oder verzweigten, gesättigten oder ungesättigten aliphatischen und/oder gesättigten oder ungesättigten cycloaliphatischen Rest mit (6 bis 22) - p Kohlenstoffatomen, der jeweils gegebenenfalls substituiert sein kann, steht,
R' und R" unabhängig voneinander für Wasserstoff oder einen aliphatischen Rest mit 1 bis 10 Kohlenstoffatomen stehen, wobei mindestens einer der Reste R` und R" für Wasserstoff steht,
n für eine ganze Zahl von 1 bis 12,
m für eine ganze Zahl von 1 bis 10 und
p für 0 oder 1 steht
mit mindestens ein von Polyisocyanat M) verschiedenes Polyisocyanat N) mit Uretdion-, Isocyanurat-, Iminooxadiazindion-, Urethan-, Allophanat-, Biuret- und/oder Oxadiazintrionstruktur, die aliphatisch, cycloaliphatisch, araliphatisch und/oder aromatisch gebundene Isocyanatgruppen tragen, vermischt wird, so dass die Polyisocyanate M) und N) in einem Gewichtsverhältnis zueinander von 40 : 60 bis 20 : 80, bevorzugt von 45 : 55 bis 25 : 75 und besonders bevorzugt von 50 : 50 bis 30 : 70, vorliegen.

Erfindungsgemäß bedeuten die Ausdrücke "umfassend" und "enthaltend" bevorzugt "im Wesentlichen bestehend aus" und besonders bevorzugt "bestehend aus". Die in den Patentansprüchen und in der Beschreibung genannten weiteren Ausführungsformen können beliebig kombiniert werden, sofern sich aus dem Kontext nicht eindeutig das Gegenteil ergibt.

"Mindestens ein", wie hierin verwendet, bezieht sich auf 1 oder mehr, beispielsweise 2, 3, 4, 5, 6, 7, 8, 9 oder mehr. Im Zusammenhang mit Bestandteilen der hierin beschriebenen Verbindungen bezieht sich diese Angabe nicht auf die absolute Menge an Molekülen, sondern auf die Art des Bestandteils. "Mindestens ein Polyisocyanat" bedeutet daher beispielsweise, dass nur eine Art von Polyisocyanat oder mehrere verschiedene Arten von Polyisocyanaten, ohne Angaben über die Menge der einzelnen Verbindungen zu machen, enthalten sein können.

Zahlenwerte, die hierin ohne Dezimalstellen angegeben sind, beziehen sich jeweils auf den vollen angegebenen Wert mit einer Dezimalstelle. So steht beispielsweise "99 %" für "99,0 %".

Numerische Bereiche, die in dem Format "in/von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Vorliegend ist der Begriff "aliphatisch" definiert als nicht-aromatische Kohlenwasserstoffgruppen, die gesättigt oder ungesättigt sind.

Vorliegend ist der Begriff "araliphatisch" definiert als aliphatische Kohlenwasserstoffreste, die gesättigt oder ungesättigt sind und mindestens einen aromatischen Substituenten aufweisen.

Vorliegend ist der Begriff "alicyclisch" oder "cycloaliphatisch" definiert als gegebenenfalls substituierte, carbocyclische oder heterocyclische Verbindungen oder Einheiten, die nicht aromatisch sind (wie z.B. Cycloalkane, Cycloalkene oder Oxa-, Thia-, Aza- oder Thiazacycloalkane). Besondere Beispiele sind Cyclohexylgruppen, Cyclopentylgruppen und ihre N- oder O-heterocyclischen Derivate wie z.B. Pyrimidin, Pyrazin, Tetrahydropyran oder Tetrahydrofuran.

Für den Fall, dass die Gruppen oder Verbindungen als "gegebenenfalls substituiert" oder "substituiert" offenbart werden, sind geeignete Substituenten -F, -Cl, -Br, -I, -OH, -OCH₃, OCH₂CH₃, -O-Isopropyl oder -O-n-Propyl, -OCF₃, -CF₃, -S-C₁₋₆-Alkyl und/oder (gegebenenfalls über ein angehängtes Heteroatom) eine lineare oder verzweigte, aliphatische und/oder alicyclische Struktureinheit mit 1 bis 12 Kohlenstoffatomen, die jeweils als Ersatz für ein kohlenstoffgebundenes Wasserstoffatom des betreffenden Moleküls fungiert. Bevorzugte Substituenten sind Halogen (insbesondere -F, -Cl), C₁₋₆-Alkoxy (insbesondere Methoxy und Ethoxy), Hydroxy, Trifluormethyl und Trifluormethoxy, die jeweils als Ersatz für ein an Kohlenstoff gebundenes Wasserstoffatom des betreffenden Moleküls fungieren.

Synonym für die Vielzahl unterschiedlicher Polymere mit beispielsweise Urethan-, Harnstoff- und/oder Thiourethanstrukturen, die sich aus Polyisocyanaten und H-aciden Verbindungen, wie z. B. Polyolen, Polyaminen und/oder Polythiolen, herstellen lassen, wird im Folgenden auch der allgemeine Begriff "Polyurethane" verwendet.

Das erfindungsgemäße Polyisocyanatgemisch stellt eine physikalische Abmischung dar und unterscheidet sich somit von einem rein chemisch auf direktem Weg hergestellten Polyisocyanat beispielsweise hinsichtlich der mittels Gelpermeationschromatographie gemäß DIN EN ISO 13885-1:2021-11 bestimmbaren Oligomerenverteilung.

In einer ersten bevorzugten Ausführungsform des erfindungsgemäßen Polyisocyanatgemisches liegen die Polyisocyanate M) und N) in einem Gewichtsverhältnis zueinander von 45 : 55 bis 25 : 75, vorzugsweise 50 : 50 bis 30 : 70 vor.

In einer weiteren bevorzugten Ausführungsform weist das erfindungsgemäße Polyisocyanatgemisch, jeweils bezogen auf das lösemittelfreie Festharz, Farbzahlen von unter 100 APHA, vorzugsweise von unter 80 APHA, besonders bevorzugt von unter 60 APHA, und/oder einen NCO-Gehalt von 6,0 bis 24,4 Gew.-%, vorzugsweise 8,0 bis 23,2 Gew.-%, besonders bevorzugt 10,0 bis 22,2 Gew.-%, und/oder einen nach DIN EN ISO 10283:2007-11 gaschromatographisch mit internem Standard gemessenen Rest-Monomeren Gehalt von weniger als 0,14 Gew.-%, bevorzugt weniger als 0,12 Gew.-% und besonders bevorzugt weniger als 0,10 Gew.-%, auf.

In einer weiteren bevorzugten Ausführungsform weist das erfindungsgemäße Polyisocyanatgemisch eine nach DIN EN ISO 3219:1994-10 bei einer Scherrate von 250 s⁻¹ gemessene Viskosität bei 23°C von weniger als 5000 mPas, bevorzugt weniger als 4000 mPas und besonders bevorzugt weniger als 3500 mPas auf.

Das mindestens eine Polyisocyanat M) wird mit dem mindestens einen Polyisocyanat N) so gemischt, dass das erfindungsgemäße Polyisocyanatgemisch erhalten wird und die Polyisocyanate M) und N) im oben genannten Gewichtsverhältnis zueinander vorliegen. Dabei können durch geeignete Wahl der Mischungsverhältnisse in den genannten Grenzen Eigenschaften, wie z. B Viskosität, NCO-Gehalt und -Funktionalität, der erfindungsgemäßen Verfahrensprodukte gezielt eingestellt werden. Das Vermischen erfolgt nach beliebigen Methoden und in beliebiger Reihenfolge, bei einer Temperatur von 0 bis 60°C, vorzugsweise 10 bis 50°C, besonders bevorzugt 20 bis 40°C, gegebenenfalls unter Inertgasatmosphäre, vorzugsweise unter Ausschluss von Feuchtigkeit.

Das erfindungsgemäße Verfahren kann lösemittelfrei durchgeführt werden. Gegebenenfalls können aber auch geeignete, gegenüber den reaktiven Gruppen der Ausgangspolyisocyanate M) und N) inerte Lösemittel mitverwendet werden. Hierfür geeignet sind sowohl unter Verwendung fossiler Rohstoffe oder auch aus nachwachsenden Rohstoffen hergestellte Lösemittel, insbesondere die an sich bekannten üblichen Lacklösemittel, wie z. B. Ethylacetat, Butylacetat, Ethylenglykolmonomethyl- oder - ethyletheracetat, 1-Methoxypropyl-2-acetat, 3-Methoxy-n-butylacetat, Ethyl(-)-L-Lactat, Aceton, 2-Butanon, 4-Methyl-2-pentanon, Cyclohexanon, Dihydrolevoglucosenon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®}, Varsol^{®} (ExxonMobil Chemical Central Europe, Köln, DE) und Shellsol^{®} (Shell Deutschland Oil GmbH, Hamburg, DE) im Handel sind, aber auch Lösemittel wie Dimethylfuran, 2-Methyltetrahydrofuran, Dimethylisosorbid (DMI), γ-Valerolacton, Propylenglykoldiacetat, Diethylenglykoldimethylether, Dipropylenglykoldimethylether, Diethylenglykolethyl- und butyletheracetat, N-Methylpyrrolidon und N-Methylcaprolactam, oder beliebige Gemische solcher Lösemittel.

In einer bevorzugten Ausführungsform des erfindungsgemäßen Verfahrens werden 20 bis 50 Gewichtsteile, bevorzugt 30 bis 50 Gewichtsteile, des Polyisocyanates M) und 50 bis 80 Gewichtsteile, bevorzugt 50 bis 70 Gewichtsteile, des Polyisocyanates N) vermischt. Bei Mitverwendung von einem oder mehreren Lösemitteln können diese entweder in dem mindestens einen Polyisocyanat M) und/oder in dem mindestens einen Polyisocyanat N), vorzugsweise in dem mindestens einen Polyisocyanat N) bereits vor Beginn des Vermischens enthalten sein. Sie können beim erfindungsgemäßen Verfahren gegebenenfalls aber auch nach Beendigung oder zu einem beliebigen Zeitpunkt während des eigentlichen Mischvorgangs zugegeben werden.

Falls überhaupt kommen Lösemittel beim erfindungsgemäßen Verfahren in einer Menge von bis zu 50 Gew.-%, vorzugsweise 40 Gew.-%, besonders bevorzugt 30 Gew.-%, bezogen auf die Summe aus Polyisocyanat M), Polyisocyanat N) und Lösemittel zum Einsatz.

Im Folgenden werden die Polyisocyanate M) und N) weiter beschrieben und bevorzugte Ausgestaltungen genannt.

### Polyisocyanat M)

Das Polyisocyanat M) ist ein spezielles PDI-Allophanatpolyisocyanat und wird beschrieben durch die allgemeine Formel (I). Bevorzugt ist eine allgemeine Formel (I) des mindestens einen Polyisocyanates M), 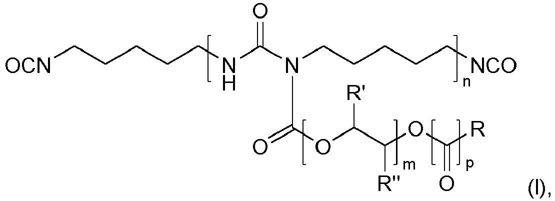 in welcher
- R: für einen linearen oder verzweigten, gesättigten oder ungesättigten aliphatischen und/oder gesättigten oder ungesättigten cycloaliphatischen Rest mit (8 bis 20) - p, besonders bevorzugt mit (10 bis 18) - p und ganz besonders bevorzugt mit (12 bis 14) - p Kohlenstoffatomen, der gegebenenfalls substituiert sein kann, steht,
- R` und R": unabhängig voneinander für Wasserstoff oder einen aliphatischen Rest mit 1 bis 10 Kohlenstoffatomen stehen, wobei mindestens einer der Reste R` und R" für Wasserstoff steht,
- n: für eine ganze Zahl von 1 bis 12,
- m: für eine ganze Zahl von 1 bis 7, besonders bevorzugt für eine ganze Zahl von 2 bis 5 und ganz besonders bevorzugt für eine ganze Zahl von2 bis 4, und
- p: für 0 oder 1 steht.

Das zur Herstellung des Polyisocyanates M) eingesetzte 1,5-Diisocyanatopentan (vorliegend auch als Pentamethylendiisocyanat oder PDI bezeichnet) kann auf verschiedene Weise, beispielsweise durch Phosgenierung in der Flüssig- oder Gasphase oder auf phosgenfreien Weg, wie z. B. durch thermische Urethanspaltung, ausgehend von vorzugsweise biotechnologisch durch Decarboxylierung der natürlich vorkommenden Aminosäure Lysin erhaltenem 1,5-Diaminopentan hergestellt werden.

Eine weitere bevorzugte Ausführungsform betrifft ein Verfahren zur Herstellung des Polyisocyanates M), durch Umsetzung von 1,5-Diisocyanatopentan mit mindestens einem Alkohol B) der allgemeinen Formel (II) 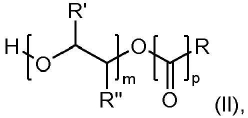 in welcher
- R: für einen linearen oder verzweigten, gesättigten oder ungesättigten aliphatischen und/oder gesättigten oder ungesättigten cycloaliphatischen Rest mit (6 bis 22) - p Kohlenstoffatomen, der jeweils gegebenenfalls substituiert sein kann, steht,
- R` und R": unabhängig voneinander für Wasserstoff oder einen aliphatischen Rest mit 1 bis 10 Kohlenstoffatomen stehen, wobei mindesten einer der Reste R` und R" für Wasserstoff steht,
- m: für eine ganze Zahl von 1 bis 10 und
- p: für 0 oder 1 steht.

Bevorzugt wird 1,5-Diisocyanatopentan mit mindestens einem Alkohol B) der allgemeinen Formel (II) umgesetzt, 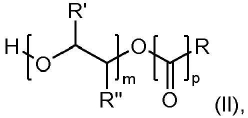 in welcher
- R: für einen linearen oder verzweigten, gesättigten oder ungesättigten aliphatischen und/oder gesättigten oder ungesättigten cycloaliphatischen Rest mit (6 bis 22) - p Kohlenstoffatomen, der jeweils gegebenenfalls substituiert sein kann, steht,
- R` und R": unabhängig voneinander für Wasserstoff oder einen aliphatischen Rest mit 1 bis 10 Kohlenstoffatomen stehen, wobei mindestens einer der Reste R` und R" für Wasserstoff steht,
- m: für eine ganze Zahl von 1 bis 10 und
- p: für 0 oder 1 steht.

Als alkoholische Komponente B) kommt bei der Herstellung des Polyisocyanates M) mindestens ein Alkohol der allgemeinen Formel (II), 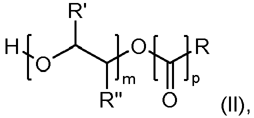 zum Einsatz, in welcher
- R: für einen linearen oder verzweigten, gesättigten oder ungesättigten aliphatischen und/oder gesättigten oder ungesättigten cycloaliphatischen Rest mit (6 bis 22) - p, vorzugsweise mit (8 bis 20) - p, besonders bevorzugt mit (10 bis 18) - p und ganz besonders bevorzugt mit (12 bis 14) - p Kohlenstoffatomen, der jeweils gegebenenfalls substituiert sein kann, steht,
- R` und R": unabhängig voneinander für Wasserstoff oder einen aliphatischen Rest mit 1 bis 10 Kohlenstoffatomen stehen, wobei mindestens einer der Reste R` und R" für Wasserstoff steht, und
- m: für eine ganze Zahl von 1 bis 10, vorzugsweise für eine ganze Zahl von 1 bis 7, besonders bevorzugt für eine ganze Zahl von 2 bis 5 und ganz besonders bevorzugt für eine ganze Zahl von 2 bis 4, und
- p: für 0 oder 1 steht.

Bei diesen Alkoholen handelt es sich beispielsweise um die an sich bekannten Alkoxylierungsprodukte von Fettalkoholen der allgemeinen Formel (III)

R¹-OH (III),

in welcher
- R¹: für einen linearen oder verzweigten, gesättigten oder ungesättigten aliphatischen und/oder gesättigten oder ungesättigten cycloaliphatischen Rest mit 6 bis 22, vorzugsweise 8 bis 20, besonders bevorzugt 10 bis 18, ganz besonders bevorzugt 12 bis 14 Kohlenstoffatomen, der jeweils gegebenenfalls substituiert sein kann, steht,
und/oder Fettsäuren der allgemeinen Formel (IV)

R²-COOH (IV),

in welcher
- R²: für einen linearen oder verzweigten, gesättigten oder ungesättigten aliphatischen und/oder gesättigten oder ungesättigten cycloaliphatischen Rest mit 5 bis 21, vorzugsweise 7 bis 19, besonders bevorzugt 9 bis 17, ganz besonders bevorzugt 11 bis 13 Kohlenstoffatomen, der jeweils gegebenenfalls substituiert sein kann, steht.

Bei vorgenannten Fettalkoholen der allgemeinen Formel (III) steht in der allgemeinen Formel (I) und der allgemeinen Formel (II) p für 0 und R¹ für R, inklusive der genannten Bevorzugungen für R¹. Ebenso sind als Reste R¹ und auch R beispielhaft geeignet, bevorzugt und besonders bevorzugt die von den nachstehend als beispielhaft geeignet, bevorzugt und besonders bevorzugt genannten Fettalkoholen abgeleiteten Reste genannt.

Bei vorgenannten Fettsäuren der allgemeinen Formel (IV) steht in der allgemeinen Formel (I) und der allgemeinen Formel (II) p für 1 und R² für R, inklusive der genannten Bevorzugungen für R². Ebenso sind als Reste R² und auch R beispielhaft geeignet, bevorzugt und besonders bevorzugt die von den nachstehend als beispielhaft geeignet, bevorzugt und besonders bevorzugt genannten Fettsäuren abgeleiteten Reste genannt.

Für die Alkoxylierung geeignete Fettalkohole sind beispielsweise 1-Hexanol (Capronalkohol), 1-Heptanol (Önanthalkohol), 1-Octanol (Caprylalkohol), 1-Nonylalkohol (Pelargonalkohol), 1-Decanol (Caprinalkohol), 1-Dodecanol (Laurylalkohol), 1-Tetradecanol (Myristylalkohol), 1-Hexadecanol (Cetylalkohol), 1-Heptadecanol (Margarylalkohol), 1-Octadecanol (Stearylalkohol), 1-Eicosanol (Arachidylalkohol), 1-Docosanol (Behenylalkohol), 1-Tetracosanol (Lignocerylalkohol), 1-Hexacosanol (Cerylalkohol), 1-Octacosanol (Montanylalkohol), 1-Triacontanol (Melissylalkohol), *cis*-9-Hexadecen-1-ol (Palmitoleylalkohol), *cis*-9-Octadecen-1-ol (Oleylalkohol), *trans*-9-Octadecen-1-ol (Elaidylalkohol), *cis*-11-Octadecen-1-ol, *cis*,*cis*-9,12-Octadecadien-1-ol (Linoleylalkohol) und 6,9,12-Octadecatrien-1-ol (γ-Linolenylalkohol), als geeignete Fettsäuren seien beispielsweise Hexansäure (Capronsäure), Heptansäure (Önanthsäure), Octansäure (Caprylsäure), Nonansäure (Pelargonsäure), Decansäure (Caprinsäure), Undecansäure, Dodecansäure (Laurinsäure), Tridecansäure, Tetradecansäure (Myristinsäure), Pentadecansäure, Hexadecansäure (Palmitinsäure), Heptadecansäure (Margarinsäure), Octadecansäure (Stearinsäure), Nonadecansäure, Eicosan-/Icosansäure (Arachinsäure), Heneicosansäure und Docosansäure (Behensäure), cis-9-Octadecensäure (Ölsäure) und cis-13-Docosensäure (Erucasäure) genannt.

Bevorzugt sind dabei solche Fettalkohole und Fettsäuren, die unter Verwendung pflanzlicher und tierischer Öle und Fette hergestellt wurden.

Besonders bevorzugte Fettalkohole zur Herstellung der alkoholischen Komponente B) sind 1-Decanol, 1-Dodecanol, 1-Tetradecanol und 1-Octadecanol, ganz besonders bevorzugt 1-Dodecanol und 1-Tetradecanol, besonders bevorzugte Fettsäuren sind Decansäure, Dodecansäure, Tetradecansäure und Hexadecansäure, ganz besonders bevorzugt Dodecansäure, Tetradecansäure. Zur Herstellung der alkoholischen Komponente B) durch Alkoxylierung der genannten Fettalkohole und/oder Fettsäuren sind beliebige Alkylenoxide mit 2 bis 12 Kohlenstoffatomen, wie z. B. Ethylenoxid, Propylenoxid, 1,2-Epoxybutan, 1,2-Epoxyhexan, 1,2-Epoxyoctan oder 1,2-Epoxydodecan, geeignet, die in beliebiger Reihenfolge oder auch im Gemisch bei der Alkoxylierungsreaktion eingesetzt werden können. Bevorzugte Alkylenoxide sind solche mit 2 bis 4 Kohlenstoffatomen. Besonders bevorzugte Alkylenoxide zur Herstellung der alkoholischen Komponente B) sind Ethylenoxid und Propylenoxid.

Aus den vorstehend beispielweise und bevorzugt genannten Alkylenoxiden ergibt sich die Anzahl der Kohlenstoffatome der Reste R` oder R" in der allgemeinen Formel (I). Somit stehen R' und R" in der allgemeinen Formel (I) und/oder Formel (II) unabhängig voneinander für Wasserstoff oder einen aliphatischen Rest mit bevorzugt 1 bis 2 Kohlenstoffatomen, wobei mindestens einer der Reste R` und R" für Wasserstoff steht.

Geeignete alkoholische Komponenten B) zur Herstellung der Polyisocyanate M) sind insbesondere Alkoxylierungsprodukte der genannten Fettsäuren und/oder Fettalkohole, die im statistischen Mittel 1 bis 10, vorzugsweise 1 bis 7, besonders bevorzugt 2 bis 5 und ganz besonders bevorzugt 2 bis 4 Alkylenoxideinheiten aufweisen. Die vorstehend als statistische Mittel genannten Zahlen und Zahlenbereiche ergeben die erfindungsgemäßen und bevorzugten ganzen Zahlen m in der allgemeinen Formel (I) und der allgemeinen Formel (II).

In einer weiteren bevorzugten Ausführungsform kommen als alkoholische Komponente B) Alkoxylierungsprodukte zum Einsatz, die im statistischen Mittel 1 bis 10, vorzugsweise 1 bis 7, besonders bevorzugt 2 bis 5 und ganz besonders bevorzugt 2 bis 4 Alkylenoxideinheiten aufweisen, wobei die die Alkylenoxideinheiten vorzugsweise Ethylenoxid- und/oder Propylenoxideinheiten umfassen oder daraus bestehen. Die vorstehend als statistische Mittel genannten Zahlen und Zahlenbereiche ergeben die erfindungsgemäßen und bevorzugten ganzen Zahlen m in der allgemeinen Formel (I) und der allgemeinen Formel (II).

Die alkoholischen Komponenten B) weisen vorzugsweise einen pH-Wert, gemessen an einer 1 %igen Lösung der jeweiligen alkoholischen Komponente B) in Wasser, von 4,0 bis 8,0, vorzugsweise von 4,5 bis 7,5, besonders bevorzugt von 5,0 bis 7,0 und/oder Gesamtgehalte an Alkalikationen von maximal 100 ppm, vorzugsweise von 1 bis 70 ppm, besonders bevorzugt von 2 bis 50 ppm auf.

Gegebenenfalls kann die Komponente B) neben den genannten Alkoxylierungsprodukten von Fettalkoholen und/oder Fettsäuren in untergeordneter Menge weitere alkoholische Verbindungen enthalten.

Hierbei handelt es sich beispielsweise um Monoalkohole, wie z. B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole, Hydroxymethylcyclohexan, 3-Methyl-3-hydroxymethyloxetan, Benzylalkohol, Phenol, die isomeren Kresole, Octylphenole, Nonylphenole und Naphthole, Furfurylalkohol und Tetrahydrofurfurylalkohol, unverzweigte aliphatische Diole, wie z. B. 1,2-Ethandiol, 1,3-Propandiol, 1,4-Butandiol, 1,5-Pentandiol, 1,6-Hexandiol, 1,7-Heptandiol und 1,8-Octandiol, cycloaliphatische Diole, wie z. B. 1,2- und 1,4-Cyclohexandiol, 1,4-Cyclohexandimethanol, 4,4'-(1-Methylethyliden)-biscyclohexanol, Triole wie z. B. 1,2,3-Propantriol, 1,1,1-Trimethylolethan, 1,2,6-Hexantriol, 1,1,1-Trimethylolpropan, und 1,3,5-Tris(2-hydroxyethyl)isocyanurat, tetrafunktionelle Alkohole, wie z. B. 2,2-Bis(hydroxymethyl)-1,3-propandiol oder beliebige Gemische solcher Alkohole.

Falls überhaupt, kommen diese weiteren alkoholischen Verbindungen zur Herstellung des Polyisocyanates M) in Mengen von maximal 25 Gew.-%, vorzugsweis maximal 20 Gew.-%, besonders bevorzugt maximal 15 Gew.-%, bezogen auf die eingesetzte Menge an Alkoxylierungsprodukten von Fettalkoholen und/oder Fettsäuren zum Einsatz.

Zur Herstellung des Polyisocyanates M) wird 1,5-Diisocyanatopentan mit mindestens einer alkoholischen Komponente B) vorzugsweise bei Temperaturen von 40 bis 200 °C, besonders bevorzugt von 60 bis 180 °C, und/oder unter Einhaltung eines Äquivalent-Verhältnisses von Isocyanatgruppen zu gegenüber Isocyanaten reaktiven Gruppen von vorzugsweise 4:1 bis 50:1, besonders bevorzugt von 5:1 bis 30:1, ganz besonders bevorzugt von 10:1 bis 25:1, zu Allophanatpolyisocyanaten umgesetzt.

Das Verfahren zur Herstellung des Polyisocyanates M) kann unkatalysiert als thermisch induzierte Allophanatisierung durchgeführt werden. Bevorzugt kommen zur Beschleunigung der Allophanatisierungsreaktion aber geeignete Katalysatoren zum Einsatz. Hierbei handelt es sich um die üblichen bekannten Allophanatisierungskatalysatoren, beispielsweise um Metallcarboxylate, Metallchelate oder tertiäre Amine der in der GB-A-0 994 890 (Seite 2, Zeilen 73 bis 87) beschriebenen Art, um Alkylierungsmittel der in der US-A-3 769 318 (Spalte 6, Zeilen 5 bis 49) beschriebenen Art oder um starke Säuren, wie sie in der EP-A-0 000 194 (Seite 13, Zeile 27 bis Seite 14, Zeilen1 bis 18) beispielhaft beschrieben sind.

Geeignete Allophanatisierungskatalysatoren sind insbesondere Zinkverbindungen, wie z. B. Zink-(II)-stearat, Zink-(II)-n-octanoat, Zink-(II)-2-ethyl-1-hexanoat, Zink-(II)-naphthenat oder Zink-(II)-acetylacetonat, Zinnverbindungen, wie z. B. Zinn-(II)-n-octanoat, Zinn-(II)-2-ethyl-1-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Zirconiumverbindungen, wie z. B. Zirconium-(IV)-2-ethyl-1-hexanoat, Zirconium-(IV)-neodecanoat, Zirconium-(IV)-naphthenat oder Zirconium-(IV)-acetylacetonat, Aluminium-tri(ethylacetoacetat), Eisen-(III)-chlorid, Kaliumoctoat, Mangan-, Cobalt- oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Geeignete, wenngleich weniger bevorzugte Katalysatoren zur Herstellung des Polyisocyanates M) sind auch solche Verbindungen, die neben der Allophanatisierungsreaktion auch die Trimerisierung von Isocyanatgruppen unter Bildung von Isocyanuratstrukturen katalysieren. Solche Katalysatoren sind beispielsweise in der EP-A-0 649 866 Seite 4, Zeile 7 bis Seite 5, Zeile 15 beschrieben.

Bevorzugte Katalysatoren zur Herstellung des Polyisocyanates M) sind Zink- und/oder Zirconiumverbindungen der obengenannten Art. Ganz besonders bevorzugt ist die Verwendung von mindestens Zink-(II)-n-octanoat, Zink-(II)-2-ethyl-1-hexanoat und/oder Zink-(II)-stearat, Zirconium-(IV)-n-octanoat, Zirconium-(IV)-2-ethyl-1-hexanoat und/oder Zirconium-(IV)-neodecanoat.

Diese Katalysatoren kommen bei der Herstellung des Polyisocyanates M), falls überhaupt, vorzugsweise in einer Menge von 0,001 bis 5 Gew.-%, besonders bevorzugt 0,005 bis 1 Gew.-%, bezogen auf das Gesamtgewicht der Reaktionspartner A) und B) zum Einsatz und können sowohl vor Reaktionsbeginn als auch zu jedem Zeitpunkt der Reaktion zugesetzt werden.

Bevorzugt kommt Bleioctoat nicht als Katalysator bei der Herstellung der Polyisocyanate M) zum Einsatz und damit ist ein erfindungsgemäßes Polyisocyanatgemisch bevorzugt, welches frei von katalytischen Mengen, besonders bevorzugt frei von nachweisbaren Mengen von Bleioctoat ist.

Die Herstellung des Polyisocyanates M) erfolgt vorzugsweise lösemittelfrei. Gegebenenfalls können aber auch geeignete, gegenüber den reaktiven Gruppen der Ausgangskomponenten inerte Lösemittel mitverwendet werden. Geeignete Lösemittel sind beispielsweise die oben als geeignete Lösemittel für das erfindungsgemäße Verfahren beschriebene Lösemittel oder beliebige Gemische solcher Lösemittel.

In einer möglichen Ausführungsform wird bei der Herstellung des Polyisocyanates M) das PDI - gegebenenfalls unter Inertgas, wie beispielsweise Stickstoff, und gegebenenfalls in Gegenwart eines geeigneten Lösungsmittels der genannten Art - bei einer Temperatur zwischen 20 und 100°C vorgelegt. Anschließend wird die alkoholische Komponente B) in der oben angegebenen Menge zugegeben und die Reaktionstemperatur für die Urethanisierung gegebenenfalls durch eine geeignete Maßnahme (Heizen oder Kühlen) auf eine Temperatur von 30 bis 120°C, vorzugsweise von 50 bis 100°C eingestellt. Im Anschluss an die Urethanisierungsreaktion, d.h. wenn der einem vollständigen Umsatz von Isocyanat- und Hydroxylgruppen theoretisch entsprechende NCO-Gehalt erreicht ist, kann die Allophanatisierung beispielsweise ohne Zusatz eines Katalysators durch Erhitzen des Reaktionsgemisches auf eine Temperatur von 140 bis 200°C gestartet werden. Vorzugsweise kommen zur Beschleunigung der Allophanatisierungsreaktion jedoch geeignete Katalysatoren der obengenannten Art zum Einsatz, wobei in Abhängigkeit von der Art und Menge des eingesetzten Katalysators Temperaturen im Bereich von 60 bis 140°C, vorzugsweise 80 bis 120°C, in der Regel ausreichend sind.

In einer anderen möglichen Ausführungsform des Verfahrens zur Herstellung des Polyisocyanates M) wird der gegebenenfalls mitzuverwendenden Katalysator dem PDI und/oder der alkoholischen Komponente B) bereits vor Beginn der eigentlichen Umsetzung zugemischt. In diesem Fall reagieren die sich intermediär bildenden Urethangruppen spontan weiter zur gewünschten Allophanatstruktur. Bei dieser Art der einstufigen Reaktionsführung wird das gegebenenfalls den Katalysator enthaltende PDI - gegebenenfalls unter Inertgas, wie beispielsweise Stickstoff, und gegebenenfalls in Gegenwart eines geeigneten Lösungsmittels der genannten Art - in der Regel bei für die Allophanatisierung optimalen Temperaturen im Bereich von 60 bis 140°C, vorzugsweise 80 bis 120°C, vorgelegt und mit der gegebenenfalls den Katalysator enthaltenden alkoholischen Komponente B) zur Reaktion gebracht.

Es ist aber auch möglich, den Katalysator dem Reaktionsgemisch zu einem beliebigen Zeitpunkt während der Urethanisierungsreaktion zuzusetzen. Bei dieser Ausführungsform des Verfahrens wird für die vor der Katalysatorzugabe ablaufende reine Urethanisierungsreaktion in der Regel eine Temperatur im Bereich von 30 bis 120°C, vorzugsweise von 50 bis 100°C, eingestellt. Nach Zugabe eines geeigneten Katalysators wird die Allophanatisierungreaktion schließlich bei Temperaturen von in der Regel 60 bis 140°C, vorzugsweise von 80 bis 120°C, durchgeführt.

Der Verlauf der Umsetzung kann beim Verfahren zur Herstellung des Polyisocyanates M) durch z. B. titrimetrische Bestimmung des NCO-Gehaltes nach DIN EN ISO 11909:2007-05 verfolgt werden. Nach Erreichen des angestrebten NCO-Gehaltes, vorzugsweise wenn der Allophanatisierungsgrad (d. h. der aus dem NCO-Gehalt errechenbare prozentuale Anteil der zu Allophanatgruppen umgesetzten, aus den Hydroxylgruppen der Komponente B) sich intermediär bildenden Urethangruppen) des Reaktionsgemisches mindestens 80 %, besonders bevorzugt mindestens 90 % beträgt, ganz besonders bevorzugt wenn der einer vollständigen Allophanatisierung entsprechende NCO-Gehalt erreicht oder unterschritten ist, wird die Reaktion abgebrochen. Dies kann bei rein thermischer Reaktionsführung beispielsweise durch Abkühlen des Reaktionsgemisches auf Raumtemperatur erfolgen. Bei der bevorzugten Mitverwendung eines Allophanatisierungskatalysators der genannten Art wird die Umsetzung im Allgemeinen aber durch Zugabe geeigneter Katalysatorgifte, beispielsweise Säuren, wie Phosphorsäure, oder Säurechloride, wie Benzoylchlorid oder Isophthaloyldichlorid, abgestoppt.

Vorzugsweise wird das Reaktionsgemisch anschließend durch Dünnschichtdestillation im Hochvakuum, beispielsweise bei einem Druck von unter 1,0 mbar, vorzugsweise unter 0,5 mbar, besonders bevorzugt unter 0,2 mbar, unter möglichst schonenden Bedingungen, beispielsweise bei einer Temperatur von 100 bis 200 °C, vorzugsweise von 120 bis 180 °C, von flüchtigen Bestandteilen (überschüssigem PDI, gegebenenfalls mitverwendeten Lösungsmitteln und, bei Verzicht auf den Einsatz eines Katalysatorgiftes, gegebenenfalls aktivem Katalysator) befreit.

Die anfallenden Destillate, die neben dem nicht umgesetzten PDI und gegebenenfalls mitverwendeten Lösungsmitteln bei Verzicht auf den Einsatz eines Katalysatorgiftes gegebenenfalls aktiven Katalysator enthalten, können problemlos zur erneuten Allophanatisierung im Verfahren zur Herstellung des Polyisocyanates M) eingesetzt werden.

In einer weiteren Ausführungsform des Verfahrens zur Herstellung des Polyisocyanates M) werden die genannten flüchtigen Bestandteile durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan vom Oligomerisierungsprodukt abgetrennt.

Unabhängig von der Art der Ausführung des Verfahrens zu ihrer Herstellung stellen die Polyisocyanate M) klare, praktisch farblose Polyisocyanate dar, die, jeweils bezogen auf das lösemittelfreie Festharz, Farbzahlen von unter 100 APHA, vorzugsweise von unter 80 APHA, besonders bevorzugt von unter 60 APHA, und/oder einen NCO-Gehalt von 6,0 bis 18,0 Gew.-%, vorzugsweise 8,0 bis 16,0 Gew.-%, besonders bevorzugt 10,0 bis 15,0 Gew.-%, und/oder einen nach DIN EN ISO 10283:2007-11 gaschromatographisch mit internem Standard gemessenen Rest-Monomeren Gehalt von weniger als 0,14 Gew.-%, bevorzugt weniger als 0,12 Gew.-% und besonders bevorzugt weniger als 0,10 Gew.-%, aufweisen.

### Polyisocyanat N)

Polyisocyanate N) für das erfindungsgemäße Polyisocyanatgemisch sowie das erfindungsgemäße Verfahren sind beliebige, durch Modifizierung einfacher aliphatischer, cycloaliphatischer, araliphatischer und/oder aromatischer Diisocyanate und/oder Triisocyanate, hergestellte Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 EP-A 0 798 299, EP-A 0 962 454, EP-A 0 962 455, EP-A 2 785 760, EP-A 2 883 895, EP-A 3 107 922, EP-A 3 107 948 und EP-A 3 337 836 beispielhaft beschrieben sind oder um beliebige Gemische solcher Polyisocyanate.

Geeignete Diisocyanate und Triisocyanate A) sind beliebige, auf verschiedene Weise, beispielsweise durch Phosgenierung der korrespondierenden Diamine oder Triamine, die sowohl unter Verwendung fossiler Rohstoffe oder auch aus nachwachsenden Rohstoffen, gegebenenfalls massenbilanziert hergestellt werden können, in der Flüssig- oder Gasphase oder auf phosgenfreien Weg, wie z. B. durch thermische Urethanspaltung, zugängliche Diisocyanate und Triisocyanate, vorzugsweise solche des Molekulargewichtsbereichs 140 bis 400 mit aliphatisch, cycloaliphatisch, araliphatisch und/oder aromatisch gebundenen Isocyanatgruppen, wie z. B. 1,4-Diisocyanatobutan, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,9-Diisocyanatononan 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 2,4'- und 4,4'-Diisocyanatodicyclohexylmethan (H₁₂-MDI), 4,4'-Diisocyanato-3,3'-dimethyldicyclohexylmethan, 4,4'-Diisocyanato-3,3',5,5'-tetramethyldicyclo-hexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1-lsocyanato-1-methyl-4(3)isocyanato-methylcyclohexan, Bis-(isocyanatomethyl)-norbornan (NBDI), 4-Isocyanatomethyl-1,8-octandiisocyanat (Triisocyanatononan; TIN), 1,3- und 1,4-Bis(isocyanatomethyl)benzol (Xylylendiisocyanat, XDI), 1,3- und 1,4-Bis-(2-isocyanato-prop-2-yl)-benzol (TMXDI), 1,3-Bis(isocyanatomethyl)-4-methylbenzol, 1,3-Bis(isocyanatomethyl)-4-ethylbenzol, 1,3-Bis(isocyanatomethyl)-5-methylbenzol, 1,3-Bis(isocyanatomethyl)-4,5-dimethylbenzol, 1,4-Bis(isocyanatomethyl)-2,5-dimethylbenzol, 1,4-Bis(isocyanatomethyl)-2,3,5,6-tetramethylbenzol, 1,3-Bis(isocyanatomethyl)-5-tert.-butylbenzol, 1,3-Bis(isocyanatomethyl)-4-chlorbenzol, 1,3-Bis(isocyanatomethyl)-4,5-dichlorbenzol, 1,3-Bis(isocyanatomethyl)-2,4,5,6-tetrachlorbenzol, 1,4-Bis(isocyanatomethyl)-2,3,5,6-tetrachlorbenzol, 1,4-Bis(isocyanatomethyl)-2,3,5,6-tetrabrombenzol, 1,4-Bis(2-isocyanatoethyl)benzol und 1,4-Bis(isocyanatomethyl)naphthalin, 1,2-, 1,3- und 1,4-Diisocyanatobenzol (Phenylendiisocyanat), 2,4- und 2,6-Diisocyanatotoluol (TDI), 2,3,5,6-Tetramethyl-1,4-diisocyanatobenzol, die isomeren Diethylphenylendiisocyanate, Diisopropylphenylendiisocyanate, Diisododecylphenylendiisocyanate und Biphenyldiisocyanate, 3,3'-Dimethoxybiphenyl-4,4'-diisocyanat, 2,2`-, 2,4'- und 4,4'-Diisocyanatodiphenylmethan (MDI), 3,3'-Dimethyldiphenylmethan-4,4'-diisocyanat, 4,4'-Diisocyanatodiphenylethan, 1,5-Diisocyanatonaphthalin (Naphthylendiisocyanat, NDI), Diphenyletherdiisocyanat, Ethylenglycoldiphenyletherdiisocyanat, Diethylenglycoldiphenyletherdiisocyanat, 1,3-Propylenglycoldiphenyletherdiisocyanat, Benzophenondiisocyanat, Triisocyanatobenzol, 2,4,6-Triisocyanatotoluol, Trimethylbenzoltriisocyanat, Diphenylmethan-2,4,4'-triisocyanat, 3-Methyldiphenylmethan-4,6,4'-triisocyanat, die isomeren Naphthalintriisocyanate und Methylnaphthalindiisocyanate, Triphenylmethantriisocyanat, 2,4-Diisocyanato-1-[(5-isocyanato-2-methylphenyl)methyl]benzol oder Mischungen aus mindestens zwei solcher Diisocyanate und Triisocyanate.

Gegebenenfalls können bei der Modifizierung der genannten Diisocyanate und/oder Triisocyanate zu Polyisocyanaten N) in untergeordneten Mengen auch Monoisocyanate, insbesondere solche des Molekulargewichtsbereichs 99 bis 300, wie z. B. n-Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexylisocyanat, Benzylisocyanat, Phenylisocyanat oder Naphtylisocyanat, mitverwendet werden. Falls überhaupt kommen Monoisocyanate dabei in Mengen von bis 30 Gew.-%, vorzugsweise bis zu 20 Gew.-%, besonders bevorzugt bis zu 10 Gew.-%, bezogen auf die Gesamtmenge an Mono-, Di- und Triisocyanaten, zum Einsatz

Bei der Herstellung der Polyisocyanate N) schließt sich an die eigentliche Modifizierungsreaktion in der Regel ein weiterer Verfahrensschritt zur Abtrennung der nicht umgesetzten überschüssigen monomeren Diisocyanate und/oder Triisocyanate und gegebenenfalls Monoisocyanate an. Diese Monomerenabtrennung erfolgt nach an sich bekannten Verfahren vorzugsweise durch Dünnschichtdestillation im Vakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan.

Bevorzugt kommen im erfindungsgemäßen Polyisocyanatgemisch als Polyisocyanat N) Polyisocyanate der genannten Art zum Einsatz, die eine mittlere Isocyanatfunktionalität von 1,8 bis 8,0, bevorzugt von 2,0 bis 7,0 und besonders bevorzugt von 2,3 bis 6,0, und/oder einen Gehalt an Isocyanatgruppen von 6,0 bis 26,0 Gew.-%, vorzugsweise von 8,0 bis 25,0 Gew.-%, besonders bevorzugt 10,0 bis 24,0 Gew.-%, und/oder einen Gehalt an monomeren Diisocyanaten von weniger als 0,14 Gew.-%, vorzugsweise weniger als 0,12 Gew.-%, besonders bevorzugt von weniger als 0,10 Gew.-% aufweisen. Für den alternativen, optionalen Fall, dass Triisocyanate und/oder Monoisocyanate zur Herstellung der Polyisocyanate N) eingesetzt wurden, beziehen sich die vorstehend genannten Rest-Monomeren Gehalte von weniger als 0,14 Gew.-%, vorzugsweise weniger als 0,12 Gew.-%, besonders bevorzugt von weniger als 0,10 Gew.-% auf die Summe aller Rest-Gehalte aller eingesetzten Diisocyanate, Triisocyanate und Monoisocyanate. Die NCO-Gehalte werden nach DIN EN ISO 11909:2007-05, die Rest-Monomeren Gehalte nach DIN EN ISO 10283:2007-11 gaschromatographisch mit internem Standard bestimmt.

Besonders bevorzugte Polyisocyanate N) für das erfindungsgemäße Polyisocyanatgemisch sind solche der genannten Art mit ausschließlich aliphatisch und/oder cycloaliphatisch gebundenen Isocyanatgruppen.

Ganz besonders bevorzugte Polyisocyanate N) sind mindestens Isocyanuratstrukturen enthaltende Polyisocyanate auf Basis von 1,5-Diisocyanatopentan, 1,6-Diisocyanatohexan, 1-Isocyanato-3,3,5-trimethyl-5-isocyanatomethylcyclohexan, 1,3-Bis(isocyanatomethyl)-benzol, Bis-(isocyanatomethyl)-norbornan und/oder 4,4'-Diisocyanatodicyclohexylmethan und am meisten bevorzugt mindestens Isocyanuratstrukturen enthaltende Polyisocyanate auf Basis von 1,5-Diisocyanatopentan, 1,6-Diisocyanatohexan oder Isocyanato-3,3,5-trimethyl-5-isocyanatomethylcyclohexan.

### Polyisocyanatgemisch und weitere Gegenstände der Erfindung:

Die erfindungsgemäßen Polyisocyanatgemische verhalten sich völlig kristallisationsstabil und bleiben auch bei 5°C und vierwöchiger Lagerung völlig klar und frei von Trübungen.

Die erfindungsgemäßen Polyisocyanatgemische stellen wertvolle Ausgangsmaterialien zur Herstellung von Polyurethan-Kunststoffen nach dem Isocyanat-Polyadditionsverfahren dar. Daher ist ein weiterer Gegenstand der Erfindung die Verwendung des erfindungsgemäßen Polyisocyanatgemisches oder des Polyisocyanatgemisches, erhältlich oder hergestellt, bevorzugt direkt hergestellt, durch das erfindungsgemäße Verfahren als Ausgangskomponente bei der Herstellung von Polyurethankunststoffen, bevorzugt zur Herstellung einer Beschichtung auf einem Substrat, wobei das Substrat bevorzugt eine gegebenenfalls vorbehandelte Karosserie, insbesondere von einem Fahrzeug, oder deren Teile ist.

Die erfindungsgemäßen Polyisocyanatgemische eignen sich in hervorragender Weise als Härter für Kunststoffe. Daher ist eine Zusammensetzung enthaltend entweder mindestens ein erfindungsgemäßes Polyisocyanatgemisch und mindestens ein gegenüber Isocyanatgruppen reaktives Bindemittel oder enthaltend mindestens ein erfindungsgemäßes Polyisocyanatgemisch, erhältlich oder hergestellt gemäß dem erfindungsgemäßen Verfahren, und mindestens ein gegenüber Isocyanatgruppen reaktives Bindemittel ein weiterer Gegenstand der vorliegenden Erfindung.

In einer bevorzugten Ausführungsform enthält die erfindungsgemäße Zusammensetzung das mindestens eine gegenüber Isocyanatgruppen reaktive Bindemittel in einer Komponente 1) und das mindestens eine erfindungsgemäße Polyisocyanatgemisch in einer Komponente 2) oder das mindestens eine Polyisocyanatgemisch, erhältlich oder hergestellt nach dem erfindungsgemäßen Verfahrens, in einer Komponente 2). Eine solche Zusammensetzung wird im Folgenden auch als Zweikomponenten-System bezeichnet.

Hierbei oder alternativ ist es weiterhin bevorzugt, dass das mindestens eine gegenüber Isocyanatgruppen reaktives Bindemittel eine Polyhydroxyverbindung ist, bevorzugt ein Polyetherpolyol, Polyesterpolyol, Polyurethanpolyol, Polysiloxanpolyol, Polycarbonatpolyol, Polyetherpolyamin, Polybutadienpolyol, Polyacrylatpolyol und/oder Polymethacrylatpolyol sowie deren Mischpolymerisate ist und besonders bevorzugt ein Polyesterpoylol, Polyacrylatpolyol oder beliebige Mischungen der vorgenannten ist.

Besonders bevorzugt ist es bei der erfindungsgemäßen Zusammensetzung, dass das mindestens eine gegenüber Isocyanatgruppen reaktive Bindemittel wenigstens eine hydroxyfunktionelle Verbindung mit einem Gehalt an Hydroxylgruppen von ≥ 2,0 Gew.-%, bevorzugt von ≥ 3,0 Gew.-% und besonders bevorzugt von ≥ 3,5 Gew.-% bezogen auf den Feststoffgehalt des, gegenüber Isocyanatgruppen reaktiven Bindemittels umfasst.

In einer weiteren bevorzugten Ausführungsform ist die erfindungsgemäße Zusammensetzung eine Beschichtungszusammensetzung, welche optional ein oder mehrere Hilfs- und Zusatzmittel enthält.

In einer bevorzugten Ausführungsform wird die erfindungsgemäße Zusammensetzung der Komponenten 1) und 2) im Folgenden als Zweikomponenten-System oder als Beschichtungszusammensetzung oder als Beschichtungsmittel oder als Zweikomponenten-Polyurethanlack bezeichnet, in denen als hydroxyfunktionelle Komponente die üblichen Polyetherpolyole, Polyesterpolyole, Polycarbonatpolyole und/oder Polyacrylatpolyole als Reaktionspartner für die Polyisocyanate vorliegen. Bevorzugte hydroxyfunktionelle Komponenten sind Polyacrylatpolyole, d. h. Polymerisate bzw. Copolymerisate von (Meth)acrylsäurealkylestern, gegebenenfalls mit Styrol oder anderen copolymerisierbaren olefinisch ungesättigten Monomeren.

Obwohl die erfindungsgemäßen Polyisocyanatgemische aufgrund ihrer niedrigen Viskosität lösemittelfrei eingesetzt werden können, lassen sich bei Bedarf aber auch mit üblichen Lösungsmitteln, beispielsweise den zuvor genannten, beim erfindungsgemäßen Verfahren gegebenenfalls mitzuverwendenden gegenüber Isocyanaten inerten Lösungsmitteln, trübungsfrei verdünnen. Im Allgemeinen besitzen die mit den erfindungsgemäßen Polyisocyanatgemische formulierten Beschichtungsmittel, denen gegebenenfalls die auf dem Lacksektor üblichen Hilfs- und Zusatzmittel, wie z. B. Verlaufshilfsmittel, Farbpigmente, Füllstoffe oder Mattierungsmittel, einverleibt werden können, schon bei Raumtemperaturtrocknung gute lacktechnische Eigenschaften. Selbstverständlich lassen sich die erfindungsgemäßen Zusammensetzungen jedoch auch unter forcierten Bedingungen bei erhöhter Temperatur bzw. durch Einbrennen bei Temperaturen bis 260 °C trocknen.

Beispiele geeigneter Hilfs und Zusatzmittel sind insbesondere Lichtschutzmittel wie UV-Absorber und sterisch gehinderte Amine (HALS), weiterhin Stabilisatoren, Füllstoffe sowie Antiabsetzmittel, Entschäumungs-, Antikrater- und/oder Netzmittel, Verlaufsmittel, filmbildende Hilfsmittel, Reaktivverdünner, Lösemittel, Substanzen zur Rheologiesteuerung, Slipadditive und/oder Komponenten, die das Anschmutzen verhindern und/oder die Reinigungsfähigkeit der ausgehärteten Beschichtungen verbessern, ferner Mattierungsmittel.

Der Einsatz von Lichtschutzmitteln insbesondere von UV-Absorber wie beispielsweise substituierten Benztriazolen, S-Phenyltriazinen oder Oxalaniliden sowie sterisch gehinderten Aminen insbesondere mit 2,2,6,6-Tetramethyl-piperidyl-Strukturen - als HALS bezeichnet - ist beispielhaft beschrieben in A. Valet, Lichtschutzmittel für Lacke, Vincentz Verlag, Hannover, 1996.

Stabilisatoren wie beispielsweise Radikalfänger und andere Polymerisationsinhibitoren wie sterisch gehinderte Phenole stabilisieren Lackkomponenten während der Lagerung und sollen Verfärbungen während der Aushärtung verhindern. Für die Komponente 2) kommen auch saure Stabilisatoren wie alkylsubstituerte Phosphorsäureteilester in Betracht.

Die erfindungsgemäße Zusammensetzung kann weiterhin Pigmente, Farbstoffe und/oder Füllstoffe enthalten Die dafür eingesetzten Pigmente auch Metallic- oder andere Effektpigmente, Farbstoffe und/oder Füllstoffe sind dem Fachmann bekannt.

Als Füllstoffe sind solche Verbindungen bevorzugt, die die Optik der Beschichtung nicht negativ beeinflussen. Beispiele sind Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen.

Sind Füllstoffe, Mattierungsmittel oder Pigmente in der erfindungsgemäßen Zusammensetzung enthalten, kann der Zusatz von Antiabsetzmitteln sinnvoll sein, um eine Trennung der Bestandteile bei Lagerung zu verhindern.

Netz- und Verlaufsmittel verbessern die Oberflächenbenetzung und/oder den Verlauf von Lacken. Beispiele sind Fluortenside, Silikontenside sowie spezielle Polyacrylate. Rheologiesteuernde Additive sind wichtig um die Eigenschaften der Zusammensetzung bei der Applikation und in der Verlaufsphase auf dem Substrat zu steuern und sind beispielsweise aus den Patentschriften WO 94/22968, EP-A-0 276 501 , EP-A-0 249 201 oder WO 97/12945 bekannt; vernetzte polymere Mikroteilchen, wie sie beispielsweise in der EP-A-0 008 127 offenbart sind; anorganische Schichtsilikate wie Aluminium-Magnesium-Silikate, Natrium-Magnesium und Natrium-Magnesium-Fluor-Lithium-Schichtsilikate des Montmorillonit-Typs; Kieselsäuren wie Aerosil^{®}; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäure-anhydrid-Copolymere und ihre Derivate oder hydrophob modifizierte ethoxylierte Urethane oder Polyacrylate.

Die erfindungsgemäße Zusammensetzung kann lösemittelfrei eingesetzt werden, enthält aber vorzugsweise mindestens ein Lösemittel, z.B. in der Komponente 1) und/oder Komponente 2).

Geeignete Lösemittel sind in dem Fachmann bekannter Art und Weise abgestimmt auf die verwendete Zusammensetzung sowie das Applikationsverfahren einzusetzen. Lösemittel sollen die eingesetzten Komponenten lösen und deren Vermischung fördern sowie Unverträglichkeiten vermeiden. Weiterhin sollen sie während der Applikation und der Härtung die Beschichtung auf die ablaufende Vernetzungsreaktion abgestimmt verlassen, so dass eine lösemittelfreie Beschichtung mit möglichst guter Optik und ohne Fehlstellen wie Kocher oder Nadelstiche entsteht. Insbesondere kommen Lösemittel in Betracht, die in der Zwei Komponenten Technologie zur Anwendung kommen. Beispiele sind Ketone wie Aceton, Methylethylketon oder Hexanon, Ester wie Ethylacetat, Butylacetat, Methoxyproylacetat, substituierte Glykole und andere Ether, Aromaten wie Xylol oder Solventnaphtha wie z.B. der Fa. Exxon-Chemie sowie Gemische der genannten Lösemittel.

Zur Steuerung der Aushärtegeschwindigkeit können bei der Formulierung der Beschich-tungsmittel geeignete Katalysatoren mitverwendet werden, beispielsweise die in der Iso-cyanatchemie üblichen Katalysatoren, wie z. B. tertiäre Amine wie Triethylamin, Pyridin, Methylpyridin, Benzyldimethylamin, N,N-Endoethylenpiperazin, N-Methylpiperidin, Penta-methyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octanoat, Zinn(II)-ethylcaproat, Dibutylzinn(IV)-dilaurat, Bismut(III)-2-ethylhexanoat, Bismut(III)-octoat oder Molybdänglykolat.

Die erfindungsgemäßen Polyisocyanatgemische eignen sich auch als Vernetzerkomponenten für in Wasser gelöst oder dispergiert vorliegende Bindemittel oder Bindemittelkomponenten mit gegenüber Isocyanatgruppen reaktionsfähigen Gruppen, insbesondere alkoholischen Hydroxylgruppen, bei der Herstellung wäßriger Zweikomponenten-Polyurethansysteme. Sie können dabei aufgrund ihrer niedrigen Viskosität entweder als solche, d. h. in hydrophober Form, oder aber auch in nach bekannten Verfahren, z. B. gemäß EP-B 0 540 985, EP-B 0 959 087 oder EP-B1 287 052, hydrophil modifizierter Form eingesetzt werden.

Die erfindungsgemäßen Polyisocyanatgemische können auch mit Polyaminen, wie z. B. den aus EP-B 0 403 921 bekannten, durch Umsetzung von Diaminen mit Fumarsäure- bzw. Maleinsäureestern erhältlichen Polyasparaginsäurederivaten, oder auch solchen Polyaminen, deren Aminogruppen in blockierter Form vorliegen, wie z. B. Polyketiminen, Polyaldiminen oder Oxazolanen, kombiniert werden. Aus diesen blockierten Aminogruppen entstehen unter Feuchtigkeitseinfluß freie Aminogruppen und im Falle der Oxazolane auch freie Hydroxylgruppen, die unter Vernetzung mit den Isocyanatgruppen der erfindungsgemäßen Polyisocyanatgemische abreagieren.

Die erfindungsgemäßen Polyisocyanatgemische können darüber hinaus auch mit Verbindungen kombiniert werden, die mindestens eine Thiolgruppe aufweisen.

Hierbei handelt es sich beispielsweise um die aus der EP-A 3 872 108 bekannten Polythiole, wie z. B. einfache Alkanthiole, Thioethergruppen enthaltenden Polythiole, Polyetherthiole, Polyesterthiole, aromatische Thioverbindungen und/oder Mercaptoalkohole.

Gemäß einer bevorzugten Ausführungsform können die Isocyanatgruppen der erfindungsgemäßen Polyisocyanatgemische anteilig oder vollständig mit wenigstens einem Blockierungsmittel umgesetzt sein.

Bei diesen Blockierungsmitteln handelt es sich insbesondere um, aus der Polyurethanchemie an sich bekannte Blockierungsmittel wie beispielsweise Malonsäurediethylester, Acetessigester, aktivierte cyclische Ketone, wie z. B. Cyclopentanon-2-carboxymethylester und -carboxyethylester, Acetonoxim, Butanonoxim, ε-Caprolactam, 3,5-Dimethylpyrazol, 1,2,4-Triazol, Dimethyl-1,2,4-triazol, Imidazol, Diisopropylamin, Benzyl-tert-butylamin oder beliebige Gemische dieser Blockierungsmittel.

In blockierter Form lassen sich die erfindungsgemäßen Polyisocyanatgemische auch in Kombination mit den obengenannten Lackbindemitteln oder Lackbindemittelkomponenten im Sinne von Einkomponenten-PUR-Einbrennsystemen einsetzen.

In allen Lackkombinationen liegen die erfindungsgemäßen Polyisocyanatgemische und der Reaktionspartner in solchen Mengen vor, dass auf jede gegebenenfalls blockierte Isocyanatgruppe 0,5 bis 3, vorzugsweise 0,6 bis 2,0, besonders bevorzugt 0,8 bis 1,6 gegebenenfalls blockierte, gegenüber Isocyanaten reaktive Gruppen entfallen. Gegebenenfalls können die erfindungsgemäßen Allophanatpolyisocyanate in untergeordneten Mengen aber auch nichtfunktionellen Lackbindemitteln zur Erzielung ganz spezieller Eigenschaften, beispielsweise als Additiv zur Haftverbesserung zugemischt werden.

Als Untergründe für die mit Hilfe der erfindungsgemäßen Polyisocyanatgemische formulierten Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Ein weiterer Gegenstand der Erfindung ist ein Verfahren zur Herstellung einer Beschichtung auf einem Substrat, umfassend die folgenden Schritte:
a) Bereitstellen eines gegebenenfalls vorbehandelten Substrats;
b) Aufbringen mindestens einer erfindungsgemäßen Zusammensetzung und
c) Aushärten der Zusammensetzung gegebenenfalls unter Wärmezufuhr.

Weitere Gegenstände der Erfindung sind somit Beschichtungsmittel enthaltend die erfindungsgemäßen Polyisocyanatgemische, sowie ein beschichtetes Substrat, erhältlich oder hergestellt durch das erfindungsgemäße Verfahren, wobei das gegebenenfalls vorbehandelte Substrat bevorzugt eine Karosserie, insbesondere von einem Fahrzeug, oder deren Teile ist und/oder bevorzugt einen oder mehrere der Werkstoffe ausgewählt aus Metall, Kunststoff oder deren Mischungen umfasst. Alternativ oder ergänzend ist das beschichtete Substrat zumindest anteilig mit einem erfindungsgemäßen Polyurethan, Polyharnstoff und/oder Polythiourethan und/oder mindestens einem erfindungsgemäßen Polyisocyanatgemisch und/oder mindestens einer erfindungsgemäßen Beschichtungszusammensetzung beschichtet. Die erfindungsgemäßen Polyisocyanatgemische oder erfindungsgemäßen Zusammensetzungen lassen auch sehr gut in Direct-Coating-Anwendungen nutzen und ergeben entsprechende direkt beschichtete Substrate.

Die erfindungsgemäßen Beschichtungsmittel können z.B. als Zwei-Komponenten-System, umfassend eine Vernetzerkomponente, enthaltend mindestens ein erfindungsgemäßes Polyisocyanatgemisch, und eine Bindemittelkomponente, enthaltend mindestens ein Lackbindemittel oder eine Lackbindemittelkomponente mit gegenüber Isocyanatgruppen reaktionsfähigen Gruppen, oder als EinKomponenten-System, enthaltend mindestens ein in blockierter Form vorliegendes erfindungsgemäßes Polyisocyanatgemisch, vorliegen. Solche Systeme sind ebenfalls Gegenstand der vorliegenden Erfindung.

Neben der bevorzugten Verwendung als Vernetzerkomponenten für lösemittelfreie, lösemit-telhaltige oder wässrige 2K-PUR-Lacke eignen sich die erfindungsgemäßen Polyisocyanatgemische hervorragend als Vernetzer für lösemittelfreie oder lösemittelhaltige Klebstoffbindemittel oder wässrige Dispersionsklebstoffe, oder auch als Aufbaukomponente zur Herstellung lichtechter kompakter oder geschäumter Polyurethan-Formkörper.

Daher sind ein weiterer Gegenstand der Erfindung Polyurethane, Polyharnstoff und/oder Polythiourethane, erhältlich oder hergestellt durch Umsetzung mindestens eines erfindungsgemäßen Polyisocyanatgemisches mit wenigstens einer hydroxy-, amino- und/oder thiofunktionellen Komponente.

Die, für das erfindungsgemäße Verfahren oder das erfindungsgemäße Polyisocyanatgemisch, als bevorzugt gekennzeichneten Merkmale sind auch für die weiteren Erfindungsgegenstände bevorzugt.

Die nachfolgenden Beispiele dienen zur Verdeutlichung der vorliegenden Erfindung, sollen aber keinesfalls als Einschränkung des Schutzbereichs verstanden werden.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s⁻¹.

Die Restmonomerengehalte wurden nach DIN EN ISO 10283:2007-11 gaschromatographisch mit internem Standard gemessen.

Die Messung der Platin-Cobalt-Farbzahl erfolgte spektrofotometrisch nach DIN EN ISO 6271-2:2005-03 mit einem LICO 400-Spektrofotometer der Fa. Lange, DE.

Die Gehalte (mol-%) der in den erfindungsgemäßen Polyisocyanaten vorliegenden Allophanat-, Urethan- und gegebenenfalls Isocyanurat- und/oder Uretdionstrukturen wurden aus den Integralen protonenentkoppelter ¹³C-NMR-Spektren (aufgenommen an einem Gerät Bruker DPX-400) errechnet und beziehen sich jeweils auf die Summe an vorliegenden Allophanat-, Urethan-, Isocyanuratstrukturen und/oder Uretdionstrukturen. Im Falle von in CDCl₃ gelösten PDI- und HDI-Polyisocyanaten weisen die einzelnen Strukturelemente folgende chemische Verschiebungen (in ppm) auf: Allophanat: 155,7 und 153,8; Urethan: 156,3; Isocyanurat: 148,4; Uretdion: 157,1.

Die Trocknungseigenschaften der Beschichtungssysteme wurden nach DIN 53 150:2002-09 bestimmt.

Glanz der erhaltenen Beschichtungen wurde reflektometrisch nach DIN EN ISO 2813:1999-06 im 20°-Winkel gemessen.

Die Bestimmung der Pendeldämpfung nach König erfolgte nach DIN EN ISO 1522:2007-04 auf Glasplatten.

Zur Prüfung der Beschichtungen auf Lösungsmittelbeständigkeit wurden jeweils kleine Mengen der Lösungsmittel Xylol, 1-Methoxypropyl-2-acetat, Ethylacetat und Aceton in Reagenzgläser gegeben und mit einem Wattebausch an der Öffnung versehen, so dass eine mit Lösungsmittel gesättigte Atmosphäre innerhalb der Reagenzgläser entstand. Die Reagenzgläser wurden anschließend mit dem Wattebausch auf die Oberfläche der auf Glas applizierten Lacke gebracht und verblieben dort für 1 bzw. 5 Minuten. Nach Abwischen des Lösungsmittels wurde der Film auf Zerstörung/Erweichung/Haftverlust geprüft und bewertet (0 = keine Veränderung, 5 = Film völlig aufgelöst). Angegeben sind die Bewertungen für die vier Lösungsmittel jeweils in folgender Reihenfolge: Xylol, 1-Methoxypropyl-2-acetat, Ethylacetat, und Aceton in Form vier aufeinanderfolgender Ziffern. Die Prüfung auf Benzinbeständigkeit erfolgte analog unter Verwendung von Superbenzin E10.

Die Nasskratzbeständigkeit der Beschichtungen wurde mittels einer Labor-Waschanlage nach DIN EN ISO 20566:2010-08 geprüft. Angegeben wird der Glanzverlust in Gloss Units (GU) nach Verkratzung (10 Zyklen). Je geringer der Glanzverlust in GU, desto widerstandsfähiger ist die Beschichtung gegen Nassverkratzung.

### Polyisocyanat N1)

Isocyanuratgruppen enthaltendes PDI-Polyisocyanat, hergestellt durch katalytische Trimerisierung von PDI nach dem in der WO 2016/146579 für die Polyisocyanatkomponente A2) beschriebenen Verfahren. Die Reaktion wurde bei einem NCO-Gehalt der Rohmischung von 36,7 % durch Zugabe einer äquimolaren Menge an Dibutylphosphat, bezogen auf eingesetzte Katalysatormenge, und 30 minütiges Nachrühren bei 80°C deaktiviert. Anschließend wurde nicht umgesetztes PDI durch Dünnschichtdestillation bei einer Temperatur von 140°C und einem Druck von 0,5 mbar abgetrennt.

| | |
|---|---|
| NCO-Gehalt: | 21,8 % |
| monomeres PDI: | 0,09 % |
| Viskosität (23 °C): | 9850 mPas |
| Farbzahl (Hazen): | 34 |

### Polyisocyanat N2)

Isocyanuratgruppen enthaltendes HDI-Polyisocyanat, hergestellt durch katalytische Trimerisierung von HDI in Anlehnung an Beispiel 11 der EP-A 330 966, mit der Änderung, dass die Reaktion bei einem NCO-Gehalt der Rohmischung von 40 % durch Zugabe von Dibutylphosphat gestoppt wurde. Anschließend wurde nicht umgesetztes HDI durch Dünnschichtdestillation bei einer Temperatur von 130°C und einem Druck von 0,2 mbar abgetrennt.

| | |
|---|---|
| NCO-Gehalt: | 21,7 % |
| Monomeres HDI: | 0,1 % |
| Viskosität (23°C): | 3080 mPas |
| Farbzahl (Hazen): | 18 |

### Polyisocyanat N3)

Isocyanuratgruppen enthaltendes HDI-Polyisocyanat, hergestellt durch katalytische Trimerisierung von HDI in Anlehnung an Beispiel 11 der EP-A 330 966, mit der Änderung, dass als Katalysatorlösemittel 2-Ethylhexanol statt 2-Ethyl-1,3-hexandiol eingesetzt wurde und die Reaktion bei einem NCO-Gehalt der Rohmischung von 42,5 % durch Zugabe von Dibutylphosphat gestoppt wurde. Anschließend wurde nicht umgesetztes HDI durch Dünnschichtdestillation bei einer Temperatur von 130°C und einem Druck von 0,2 mbar abgetrennt. Das Produkt wies folgende Kenndaten und Zusammensetzung auf:

| | |
|---|---|
| NCO-Gehalt: | 22,9 % |
| monomeres HDI: | 0,08 % |
| Viskosität (23°C): | 1210 mPas |
| Farbzahl (Hazen): | 10 |

### Polyisocyanat M1)

1234 g (8,0 mol) PDI wurden bei einer Temperatur von 95°C unter trockenem Stickstoff und Rühren vorgelegt und mit 0,16 g Zink-(II)-2-ethyl-1-hexanoat als Katalysator versetzt. Über einen Zeitraum von ca. 45 min wurden 309 g (1,0 mol) eines im statistischen Mittel dreifach ethoxylierten Laurylakohols (OH-Zahl: 181,8 mg KOH/g, Na-Gehalt: 28 mg/kg, K-Gehalt: < 1 mg/kg) zugetropft, wobei die Temperatur der Mischung aufgrund der exotherm einsetzenden Reaktion bis auf 100°C anstieg. Das Reaktionsgemisch wurde anschließend bei 100°C weiter gerührt bis der NCO-Gehalt nach ca. 1 h auf 35,6 % abgesunken war. Der Katalysator wurde durch Zugabe von 0,16 g ortho-Phosphorsäure deaktiviert und das nicht umgesetzte monomere PDI bei einer Temperatur von 130°C und einem Druck von 0,1 mbar im Dünnschichtverdampfer abgetrennt. Man erhielt 723 g eines praktisch farblosen klaren Polyisocyanatgemisch, das folgende Kenndaten und Zusammensetzung aufwies:

| | | |
|---|---|---|
| NCO-Gehalt: | 14,1 % | |
| monomeres PDI: | 0,03 % | |
| Viskosität (23°C): | 290 mPas | |
| Farbzahl (APHA): | 21 Hazen | |
| Zusammensetzung: | Allophanat: | 70,3 mol-% |
| | Urethan: | 4,2 mol-% |
| | Isocyanurat: | 24,9 mol-% |
| | Uretdion: | 0,6 mol-% |

### Beispiel 1 (Herstellung des Polyisocyanatgemisches 1)

30 Gewichtsteile des Polyisocyanates M1) wurden bei 50°C mit 70 Gewichtsteilen des Polyisocyanates N1) durch Rühren homogen gemischt. Nach Abkühlen auf Raumtemperatur lag ein erfindungsgemäßes Polyisocyanatgemisch 1 mit folgenden Kenndaten vor:

| | |
|---|---|
| NCO-Gehalt: | 19,5 % |
| monomeres PDI: | 0,07 % |
| Viskosität (23°C): | 3100 mPas |
| Farbzahl (Hazen): | 29 |

Das erfindungsgemäße Polyisocyanatgemisch 1 weist eine vergleichbare Viskosität auf wie das Standard-HDI-Trimer N2).

### Beispiel 2 (Herstellung des Polyisocyanatgemisches 2)

50 Gewichtsteile des Polyisocyanates M1) wurden bei 50°C mit 50 Gewichtsteilen des Polyisocyanates N1) durch Rühren homogen gemischt. Nach Abkühlen auf Raumtemperatur lag ein erfindungsgemäßes Polyisocyanatgemisch 2 mit folgenden Kenndaten vor:

| | |
|---|---|
| NCO-Gehalt: | 18,0 % |
| monomeres PDI: | 0,06 % |
| Viskosität (23°C): | 1300 mPas |
| Farbzahl (Hazen): | 28 |

Das erfindungsgemäße Polyisocyanatgemisch 2 weist eine vergleichbare Viskosität auf wie das niedrigviskose HDI-Trimer N3).

### Beispiel 3 - 6 (Beschichtungszusammensetzung und Beschichtung, erfindungsgemäß und Vergleich)

166,9 Gew.-Teile des handelsüblichen Polyacrylatpolyols Uralac CY240 EF-75 (Covestro AG, Leverkusen, DE) mit einem Festkörpergehalt von 74 Gew.-% und einem OH-Gehalt (bezogen aufden Festkörper) von 4,0 %, entsprechend einem Äquivalentgewicht von 425 g/val OH, wurden mit 2,9 Gew.-Teilen einer 10 %igen Lösung eines handelsüblichen Verlaufsadditivs (BYK 331; BYK-Chemie GmbH, Wesel, DE) in Butylacetat, 5,8 Gew.-Teilen einer 1 %igen Lösung von Dibutylzinndilaurat (DBTL) in Butylacetat als Katalysator, 1,9 Gew.-Teilen einer 50 %igen Lösung eines handelsüblichen Lichtstabilisators (Tinuvin 123; BASF SE, Ludwigshafen, DE), Tinuvin 384-2 (BASF SE, Ludwigshafen, DE) eingesetzt jeweils als 50 %ige Lösung in Butylacetat) und dem handelsüblichen Oberflächenadditiv BYK-358 N (BYK-Chemie GmbH, Wesel, DE; eingesetzt in Lieferform) durch intensives Rühren bei Raumtemperatur homogen vermischt. Anschließend wurde durch Zugabe eines zu gleichen Gew.-Teilen aus Butylacetat und Xylol bestehenden Lösemittelgemisches und weiteres intensives Rühren ein nicht flüchtiger Anteil von 68 Gew.-% eingestellt.

In diese Stammlackkomponente (Komponente A) wurden die erfindungsgemäßen Polyisocyanatgemische bzw. Vergleichspolyisocyanate (Komponenten B) eingerührt und der Festkörpergehalt der fertigen Beschichtungsmittel mit Butylacetat / Xylol (1 : 1) auf eine Auslaufzeit von ca. 20 s im ISO-Becher mit 4 mm Düse eingestellt.

**Tabelle 1: Zusammensetzungen der einzelnen Formulierungen**

| **Beispiel** | **3** | **4** | **5** (Vergleich) | **6** (Vergleich) |
|---|---|---|---|---|
| **Komponente A** | | | | |
| Stammlack | 221,2 | 221,2 | 221,2 | 221,2 |

| **Komponente B** | | | | |
|---|---|---|---|---|
| Polyisocyanatgemisch 1 | 76,2 | | | |
| Polyisocyanatgemisch 2 | | 82,5 | | |
| Polyisocyanat N2) | | | 68,5 | |
| Polyisocyanat N3) | | | | 64,9 |
| Butylacetat / Xylol | 107,2 | 112,2 | 101,2 | 98,4 |
| Summe Gew.-Teile | 404,6 | 415,9 | 390,9 | 384,5 |
| NCO:OH | 1 : 1 | 1 : 1 | 1 : 1 | 1 : 1 |
| Feststoffgehalt bei Applikation [%] | 56,0 | 56,0 | 56,0 | 56,0 |

Zur Bestimmung der Pendeldämpfung nach König und Prüfung der Lösemittel- und Benzinbeständigkeit wurden die Beschichtungsmittel jeweils mittels einer Fließbecherpistole in einer Nassfilmschichtdicke von 150 µm auf Glasplatten aufgebracht und nach 10 minütigem Ablüften bei Raumtemperatur innerhalb von 30 Minuten bei 60°C ausgehärtet. Alle Glasplatten wurden vor dem Testen für mindestens 48 h bei Raumtemperatur gelagert.

Zur Bestimmung der Kratzfestigkeit wurden die Beschichtungsmittel mittels einer Fließbecherpistole als Klarlacke auf KTL-Bleche appliziert (Trockenschichtdicke ca. 50 µm), die zuvor mit einem handelsüblichen 1K-OEM-Hydrofüller (Trockenschichtdicke ca. 35µm) und einem schwarzen 1K-OEM-Hydrobasislack (Trockenschichtdicke ca. 15µm) beschichtet worden waren, und innerhalb von 30 Minuten bei 60°C ausgehärtet. Alle Bleche wurden vor Prüfung mindestens 48 h bei Raumtemperatur gelagert.

**Tabelle 2: Ergebnisse der anwendungstechnischen Prüfungen**

| **Beispiel** | | **3** | **4** | **5** (Vergleich) | **6** (Vergleich) |
|---|---|---|---|---|---|
| **Prüfungen auf Glas** | | | | | |
| **Pendelhärte** | 1 d | 74 | 47 | 97 | 95 |
| | 3d | 129 | 99 | 159 | 166 |
| | 7d | 158 | 111 | 190 | 185 |
| **Lösemittelbeständigkeit** (7 d) | 1 min | 1/2/2-3/4 | 2/2/4/4 | 1/2/3/3-4 | 1/2/3/4 |
| | 5 min | 2/2/5/5 | 4/2/4/4 | 2/2/5/5 | 2/2/4/4 |
| **Benzinbeständigkeit** (1/5 min) | 1 d | 1-2/3 | 3/4 | 1-2/2 | 2-3/3 |
| | 3d | 0/1 | 0-1/1-2 | 0/1 | 0/0-1 |
| | 7 d | 0/0 | 0/1 | 0/0 | 0/0 |

| **Prüfungen auf Komplettaufbau** | | | | | |
|---|---|---|---|---|---|
| Schichtdicke | | 53 | 55 | 43 | 52 |

| **Laborwaschanlage** | | | | | |
|---|---|---|---|---|---|
| Ausgang | Haze | 16,9 | 15,6 | 15,4 | 16,3 |
| nach Verkratzung | Haze | 44,1 | 31,9 | 46,2 | 49,0 |
| Δ | Haze | 27,2 | 16,3 | 30,8 | 32,7 |
| nach Reflow (2 h / 60°C) | Haze | 29,1 | 25,9 | 24,9 | 25,6 |
| Ausgang | Glanz 20° | 91,4 | 91,3 | 91,8 | 92,1 |
| nach Verkratzung | Glanz 20° | 75,1 | 82,8 | 74,7 | 72,6 |
| Δ | Glanz 20° | 16,3 | 8,5 | 17,1 | 19,5 |
| nach Reflow (2 h / 60°C) | Glanz 20° | 85,2 | 86,4 | 87,1 | 86,8 |
| **Restglanz nach Verkratzung** | **%** | **82,2** | **90,7** | **81,4** | **78,8** |
| **Restglanz nach Reflow** | **%** | **93,2** | **94,6** | **94,9** | **94,2** |

Der Vergleich von Beispiel 3 mit dem Vergleichsbeispiel 5 zeigt, dass das erfindungsgemäße Polyisocyanatgemisch 1 auf Basis von PDI als Vernetzer in einem Autoreparaturklarlack zu vergleichbaren Eigenschaften führt wie das Standard-HDI-Trimer N2). Der Vergleich von Beispiel 4 mit dem Vergleichsbeispiel 6 zeigt, dass sich bei Vernetzung mit dem erfindungsgemäßen Polyisocyanatgemisch 2 auf Basis von PDI, das einen höheren Anteil an Polyisocyanat M aufweist als das Polyisocyanatgemisch 1, gegenüber dem niedrigviskosen HDI-Polyisocyanat N3) die Kratzfestigkeit des Autoreparaturklarlacks deutlich erhöht.

Durch geeignete Wahl des Anteils an Polyisocyanat M in den erfindungsgemäßen Polyisocyanatgemischen lässt sich die Kratzfestigkeit von Beschichtungen gezielt einstellen.

## Patentansprüche

1. Polyisocyanatgemisch, enthaltend mindestens ein Polyisocyanat M) der allgemeinen Formel (I) 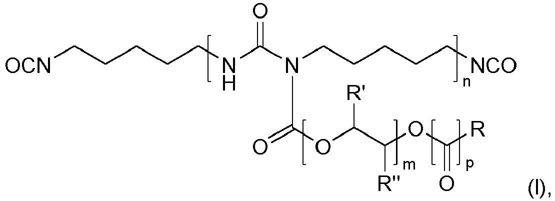 in welcher
R für einen linearen oder verzweigten, gesättigten oder ungesättigten aliphatischen und/oder gesättigten oder ungesättigten cycloaliphatischen Rest mit (6 bis 22) - p Kohlenstoffatomen, der jeweils gegebenenfalls substituiert sein kann, steht,
R' und R" unabhängig voneinander für Wasserstoff oder einen aliphatischen Rest mit 1 bis 10 Kohlenstoffatomen stehen, wobei mindestens einer der Reste R` und R" für Wasserstoff steht,
n für eine ganze Zahl von 1 bis 12,
m für eine ganze Zahl von 1 bis 10 und
p für 0 oder 1 steht
und mindestens ein von Polyisocyanat M) verschiedenes Polyisocyanat N) mit Uretdion-, Isocyanurat-, Iminooxadiazindion-, Urethan-, Allophanat-, Biuret- und/oder Oxadiazintrionstruktur, die aliphatisch, cycloaliphatisch, araliphatisch und/oder aromatisch gebundene Isocyanatgruppen tragen,
wobei die Polyisocyanate M) und N) in einem Gewichtsverhältnis zueinander von 40 : 60 bis 20 : 80 vorliegen.

2. Polyisocyanatgemisch gemäß Anspruch 1, **dadurch gekennzeichnet, dass** die Polyisocyanate M) und N) in einem Gewichtsverhältnis zueinander von 45 : 55 bis 25 : 75 und bevorzugt von 50 :50 bis 30 : 70 vorliegen.

3. Polyisocyanatgemisch gemäß Anspruch 1 oder 2, **dadurch gekennzeichnet, dass** es einen NCO-Gehalt bestimmt nach DIN EN ISO 11909:2007-05 von 6 bis 24,4 Gew.-%, bevorzugt von 8 bis 23,2 Gew.-% und besonders bevorzugt von 10 bis 22,2 Gew.-% aufweist.

4. Polyisocyanatgemisch gemäß einem der Ansprüche 1 bis 3, **dadurch gekennzeichnet, dass** das Polyisocyanat N) aliphatisch, araliphatisch und/oder cycloaliphatisch gebundene Isocyanatgruppen, bevorzugt auf Basis von 1,5-Diisocyanatopentan, 1,6-Diisocyanatohexan, 1-Isocyanato-3,3,5-trimethyl-5-isocyanatomethylcyclohexan, 1,3-Bis(isocyanatomethyl)-benzol, Bis-(isocyanatomethyl)-norbornan und/oder 4,4'-Diisocyanatodicyclohexylmethan ist und besonders bevorzugt mindestens Isocyanuratstrukturen auf Basis von 1,5-Diisocyanatopentan, 1,6-Diisocyanatohexan, 1-lsocyanato-3,3,5-trimethyl-5-isocyanatomethylcyclohexan, 1,3-Bis(isocyanatomethyl)-benzol, Bis-(isocyanatomethyl)-norbornan und/oder 4,4'-Diisocyanatodicyclohexylmethan enthält und ganz besonders bevorzugt Isocyanuratstrukturen auf Basis von 1,5-Diisocyanatopentan, 1,6-Diisocyanatohexan und/oder 1-Isocyanato-3,3,5-trimethyl-5-isocyanatomethylcyclohexan enthält.

5. Polyisocyanatgemisch gemäß einem der Ansprüche 1 bis 4 mit einer nach DIN EN ISO 3219:1994-10 bei einer Scherrate von 250 s⁻¹ gemessenen Viskosität bei 23°C von weniger als 5000 mPas, bevorzugt weniger als 4000 mPas, besonders bevorzugt weniger als 3500 mPas.

6. Verfahren zur Herstellung eines Polyisocyanatgemisches, **dadurch gekennzeichnet, dass** mindestens ein Polyisocyanat M) der allgemeinen Formel (I) 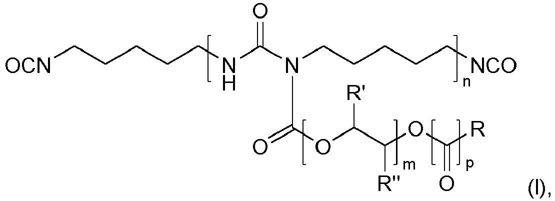 in welcher
R für einen linearen oder verzweigten, gesättigten oder ungesättigten aliphatischen und/oder gesättigten oder ungesättigten cycloaliphatischen Rest mit (6 bis 22) - p Kohlenstoffatomen, der jeweils gegebenenfalls substituiert sein kann, steht,
R' und R" unabhängig voneinander für Wasserstoff oder einen aliphatischen Rest mit 1 bis 10 Kohlenstoffatomen stehen, wobei mindestens einer der Reste R` und R" für Wasserstoff steht,
n für eine ganze Zahl von 1 bis 12,
m für eine ganze Zahl von 1 bis 10 und
p für 0 oder 1 steht
mit mindestens ein von Polyisocyanat M) verschiedenes Polyisocyanat N) mit Uretdion-, Isocyanurat-, Iminooxadiazindion-, Urethan-, Allophanat-, Biuret- und/oder Oxadiazintrionstruktur, die aliphatisch, cycloaliphatisch, araliphatisch und/oder aromatisch gebundene Isocyanatgruppen tragen, vermischt wird, so dass die Polyisocyanate M) und N) in einem Gewichtsverhältnis zueinander von 50 : 50 bis 20 : 80, bevorzugt von 50 : 50 bis 25 : 75 und besonders bevorzugt von 50 : 50 bis 30 : 70, vorliegen.

7. Verwendung des Polyisocyanatgemisches gemäß einem der Ansprüche 1 bis 5 oder des Polyisocyanatgemisches, erhältlich oder hergestellt, bevorzugt direkt hergestellt, durch das Verfahren gemäß Anspruch 6 als Ausgangskomponente bei der Herstellung von Polyurethankunststoffen, bevorzugt zur Herstellung einer Beschichtung auf einem Substrat, wobei das Substrat bevorzugt eine gegebenenfalls vorbehandelte Karosserie, insbesondere von einem Fahrzeug, oder deren Teile ist.

8. Polyurethan, Polyharnstoff und/oder Polythiourethan, erhältlich oder hergestellt durch Umsetzung mindestens eines Polyisocyanatgemisches gemäß einem der Ansprüche 1 bis 5 mit wenigstens einer hydroxy-, amino- und/oder thiofunktionellen Komponente.

9. Zusammensetzung enthaltend entweder mindestens ein Polyisocyanatgemisch gemäß einem der Ansprüche 1 bis 5 und mindestens ein gegenüber Isocyanatgruppen reaktives Bindemittel oder enthaltend mindestens ein Polyisocyanatgemisch, erhältlich oder hergestellt gemäß einem Verfahren nach Anspruch 6, und mindestens ein gegenüber Isocyanatgruppen reaktives Bindemittel.

10. Zusammensetzung gemäß Anspruch 9, **dadurch gekennzeichnet, dass** sie das mindestens eine gegenüber Isocyanatgruppen reaktives Bindemittel in einer Komponente 1) und das mindestens eine Polyisocyanatgemisch gemäß einem der Ansprüche 1 bis 5 in einer Komponente 2) oder das mindestens eine Polyisocyanatgemisch, erhältlich oder hergestellt gemäß einem Verfahren nach Anspruch 6, in einer Komponente 2) enthält und/oder dass das mindestens eine gegenüber Isocyanatgruppen reaktives Bindemittel eine Polyhydroxyverbindung, bevorzugt ein Polyetherpolyol, Polyesterpolyol, Polyurethanpolyol, Polysiloxanpolyol, Polycarbonatpolyol, Polyetherpolyamin, Polybutadienpolyol, Polyacrylatpolyol und/oder Polymethacrylatpolyol sowie deren Mischpolymerisate und besonders bevorzugt ein Polyesterpoylol, Polyacrylatpolyol oder beliebige Mischungen der vorgenannten, ist.

11. Zusammensetzung gemäß Anspruch 9 oder 10, **dadurch gekennzeichnet, dass** das mindestens eine gegenüber Isocyanatgruppen reaktive Bindemittel wenigstens eine hydroxyfunktionelle Verbindung mit einem Gehalt an Hydroxylgruppen von ≥ 2,0 Gew.-%, bevorzugt von ≥ 3,0 Gew.-% und besonders bevorzugt von ≥ 3,5 Gew.-% bezogen auf den Feststoffgehalt des, gegenüber Isocyanatgruppen reaktiven Bindemittels umfasst.

12. Zusammensetzung gemäß einem der Ansprüche 9 bis 11, **dadurch gekennzeichnet, dass** es eine Beschichtungszusammensetzung ist, welche optional ein oder mehrere Hilfs- und Zusatzmittel enthält.

13. Verfahren zur Herstellung einer Beschichtung auf einem Substrat, umfassend die folgenden Schritte:
a) Bereitstellen eines gegebenenfalls vorbehandelten Substrats;
b) Aufbringen mindestens einer Zusammensetzung gemäß einem der Ansprüche 9 bis 12;
c) Aushärten der Zusammensetzung gegebenenfalls unter Wärmezufuhr.

14. Beschichtetes Substrat, erhältlich oder hergestellt durch ein Verfahren nach Anspruch 13, wobei das gegebenenfalls vorbehandelte Substrat bevorzugt eine Karosserie, insbesondere von einem Fahrzeug, oder deren Teile ist und/oder bevorzugt einen oder mehrere der Werkstoffe ausgewählt aus Metall, Kunststoff oder deren Mischungen umfasst.
